**Europäisches Patentamt**

**European Patent Office**

**Office européen des brevets**

(19)

(11) Veröffentlichungsnummer: **0 116 716**
**B1**

(12)                **EUROPÄISCHE PATENTSCHRIFT**

(45) Veröffentlichungstag der Patentschrift:
31.05.89

(51) Int. Cl.⁴: **B 04 B 11/02,** B 04 B 13/00

(21) Anmeldenummer: **83112941.6**

(22) Anmeldetag: **22.12.83**

(54) **Verfahren und Vorrichtung für das Separieren von Medien.**

(30) Priorität: **14.01.83 DE 3301113**

(43) Veröffentlichungstag der Anmeldung:
**29.08.84 Patentblatt 84/35**

(45) Bekanntmachung des Hinweises auf die Patenterteilung:
**31.05.89 Patentblatt 89/22**

(84) Benannte Vertragsstaaten:
**AT CH DE FR GB IT LI**

(56) Entgegenhaltungen:
**DE-B-2 145 873**
**US-A-3 955 755**

(73) Patentinhaber: **Fresenius AG, Gluckensteinweg 5,
D-6380 Bad Homburg v.d.H. (DE)**

(72) Erfinder: **Neumann, Hans- Jürgen, Dr.,
Dillingerstrasse 13, D-6690 St. Wendel (DE)**
Erfinder: **Meisberger, Artur, Winterbacherstrasse
61, D-6690 St. Wendel (DE)**

(74) Vertreter: **Luderschmidt, Wolfgang, Dr. Dipl-
Chem., Görtz, Dr. Fuchs, Dr. Luderschmidt
Patentanwälte Sonnenberger Strasse 100
Postfach 26 26, D-6200 Wiesbaden (DE)**

## Beschreibung

Die Erfindung betrifft ein Verfahren für das Separieren von Medien gemäß dem Oberbegriff des Anspruchs 1, sowie eine Vorrichtung für das Separieren von Medien gemäß dem Oberbegriff des Anspruchs 7.

Derartige Verfahren werden insbesondere in Verbindung mit Separationskammern verwendet, in welchen Medien mit unterschiedlichen physikalischen Eigenschaften, insbesondere mit unterschiedlichen optischen Eigenschaften und insbesondere mit unterschiedlichem Extinktionskoeffizienten voneinander separiert und die in der Separationskammer vorliegenden Medienverteilung erfaßt werden soll. So ist es aus der US-A-3 955 755 bekannt, ein integrales optisches Signal zu messen, welches sich durch Beaufschlagen eines Meßfensters an der Phasengrenze zwischen zwei Medien mit einen Abfragestrahl ergibt, und dieses Meßsignal selbst als Ist-Wert für eine Regelung für die Trennung der Medien zu verwenden. Bei derartigen Verfahren fließen Störungen wie beispielsweise Schwankungen der optischen Eigenschaften, wie z. B. der Extinktion, hervorgerufen z. B. durch Verschmutzung des Meßfensters oder Alterung des optischen Senders, voll in das Meßergebnis und damit in den Regelkreis mit ein. Dies macht häufig Justierungen des Nullpunktes der Separation erforderlich. Aus einer Änderung der Intensität während der Separation ergibt sich eine weitere Fehlermöglichkeit.

Es ist daher Aufgabe der Erfindung, ein Verfahren für das Separieren von Medien gemäß dem Oberbegriff des Anspruchs 1 bzw. eine Vorrichtung für das Separieren von Medien gemäß dem Oberbegriff des Anspruchs 7 derart zu schaffen, daß eine sehr schnelle und störungsunanfällige sowie justagefreie Regelung der Separation erreicht wird.

Diese Aufgabe wird durch die kennzeichnenden Merkmale der Ansprüche 1 bzw. 7 gelöst. Vorteilhafte Weiterbildungen ergeben sich aus den Unteransprüchen.

Ein besonderer Vorteil ergibt sich daraus, daß ein räumlicher Bereich um eine Trennrenngrenze zweier zu separierender Medien im folgenden Übergangsbereich genannt, in mehrere räumlich getrennte Abtastbereiche aufgeteilt wird, die mit einem Abfragestrahl abgetastet oder von mehreren diskreten Abfragestrahlen gebildet werden. Hierdurch können optische Eigenschaften, insbesondere die Extinktion als Meßgröße in quantisierter Form erfaßt und so für jeden Abtastbereich eine Einzelentscheidung erreicht werden. Das Meßergebnis der Abtastung kann für die Regelung einer Phasengrenze in dem Übergangsbereich zwischen den zu separierenden Medien verwendet werden. Daraus ergibt sich der besondere Vorteil, daß die Phasengrenze zwischen den Medien auf jeden gewünschten Sollwert, der insbesondere durch die gewünschte Trenngrenze vorgesehen wird, geregelt werden kann. In einer beispielhaften Anwendung des erfindungsbemäßen Verfahrens mit einer Blutzentrifuge, welche Vollblut in die Bestandteile Blutplasma, weiße Zellen und rote Zellen aufspaltet, ergibt sich der besondere Vorteil, daß eine kontinuierliche Förderung dergestalt erfolgen kann, daß mittels Förderpumpen für die einzelnen Medien die Blutzentrifuge kontinuierlich betrieben werden kann. Die Phasengrenze bzw. die Phasengrenzen können über die Förderraten der Pumpen relativ zu einer Trenngrenze bzw. Trenngrenzen eingestellt und konstant gehalten werden. Hieraus ergibt sich der Vorteil, daß die einzelnen reinen Bestandteile des Blutes mit maximaler Effizienz gewonnen werden können.

Ein weiterer besonderer Vorteil ergibt sich durch Abtastung der Abtastbereiche zeitlich hintereinander. Hierdurch ist es möglich, lediglich eine Abtastvorrichtung, beispielsweise in Form einer Lichtschranke, vorzusehen und somit eine preisgünstige Vorrichtung zu schaffen. Ein weiterer besonderer Vorteil ergibt sich daraus, daß die Separationskammer, die beispielsweise auch als Rotor einer Zentrifuge ausgebildet sein kann, nicht mit elektrischen Anschlüssen versehen sein muß, sondern lediglich mit den Abtastbereichen, die aus kleinen, für den Abfragestrahl strahlendurchlässigen Fenstern bestehen können.

Ein weiterer besonderer Vorteil der Erfindung ergibt sich daraus, daß die Separationskammer für den Abfragestrahl außer im Bereich der Abtastbereiche undurchlässig ist, so daß ein Meßsignal lediglich an den Abtastbereichen entstehen kann und keine besonderen Maßnahmen ergriffen werden müssen, um an anderen Bereichen unerwünschte Störungen zu unterdrücken. Beispielsweise lassen sich durch den mit dem Rotor der Zentrifuge umlaufenden Schlauch entstehende Störungen auf diese Weise problemlos ausblenden.

Besonders vorteilhaft ist es, wenn die Abtastbereiche in einer Reihe angeordnet sind, welche die Phasengrenze zwischen den Medien schneidet und die Abtasteinrichtung alle Abtastbereiche zeitlich hintereinander erfassen kann. Wenn die Reihe der Abtastbereiche an der Abtasteinrichtung vorbei bewegt wird, wird der Übergangsbereich zwischen den Medien abgetastet. Als Ergebnis dieser Abtastung erhält man eine zeitliche Abfolge von durch Abtastbereichen hervorgerufenen Signalen, die jedes für sich ausgewertet die Information über die Verteilung der Medien, insbesondere der Lage der Phasengrenze beinhaltet. Insbesondere können bei optisch sehr unterschiedlichen Medien wie den roten Blutzellen und Plasma die durch einzelne Abtastbereiche hervorgerufenen Signale sehr einfach den digitalen Werten 0 bzw. 1 zugeordnet werden, so daß bei einem ersten Medium ein Eins-Signal und bei einem zweiten Medium ein Null-Signal erzeugt wird.

Eine Verfälschung der Meßergebnisse kann auch dadurch vermieden werden, daß eine Triggervorrichtung vorgesehen ist, mit welcher die Messung erst in einem Bereich unmittelbar um die Reihe der Abtastbereiche gestattet, so daß die Erfassung gestartet und ggf. nach dem letzten Abtastbereich wieder beendet werden kann.

Ein weiterer besonderer Vorteil der Erfindung ergibt sich daraus, daß das Meßergebnis in einfacher Form verwertet werden kann. Es ist lediglich erforderlich, die Anzahl der Eins-Signale bei einer Messung zu zählen. Infolge der Anordnung der Reihe der Abtastbereiche entspricht die Anzahl der Eins-Signale einer bestimmten Lage der Phasengrenze, dem Ist-Wert der Phasengrenze im Übergangsbereich. Es ist möglich, die Lage der Phasengrenze entsprechend einer gewünschten Anzahl von Impulsen der Eins-Signale entsprechend dem Soll-Wert zu regeln. Wenn beispielsweise die Phasengrenze auf eine Lage zwischen dem vierten und fünften Abtastbereich eingestellt werden soll, so kann eine Mengensteuervorrichtung für die Medien so gesteuert werden, daß der gewünschte Sollwert eingehalten wird. Die Regelung ist in einem eingeschwungenem Zustand, wenn vier Impulse des Eins-Signales bei jeder Messung gezählt werden. Wenn lediglich drei Impulse gezählt werden, bedeutet dies, daß die Phasengrenze zu sehr in Richtung auf das erste Medium, welches strahlenundurchlässig ist, verschoben ist. Um den Anteil des ersten Mediums in der Verteilung zu erhöhen kann entweder eine Förderpumpe, welche das erste Medium absaugt, gedrosselt oder eine Förderpumpe, welche das zweite Medium absaugt, beschleunigt werden, so daß die Lage der Phasengrenze den gewünschten Sollwert wieder einnimmt.

Ein weiterer besonderer Vorteil der Erfindung ergibt sich auch daraus, daß eine mögliche Schwankung optischer Eigenschaften, insbesondere der Extinktion des zweiten Mediums keinen Einfluß auf die Regelung ausübt. Wenn das zweite Medium aus roten Blutzellen besteht, ist dies besonders vorteilhaft, da z. B. Fehler durch Hämolyse oder andere Verfärbungen des Plasmas eliminiert werden können. Es ist möglich, die Entscheidungsschwelle, die Triggergrenze zwischen dem Null-Signal und dem Eins-Signal auf einen unkritischen Wert einzustellen, so daß der Entscheidungsbereich fur eine digitale Ja-Nein-Entscheidung sehr breit und damit sehr sicher gegenüber der so beschriebenen Störgröße ist. Hieraus ergibt sich als weiterer besonderer Vorteil, daß die erfindungsgemäße Vorrichtung auch gegen Extinktionsunterschiede durch Verunreinigungen der Abtastbereiche an der Separationskammer bzw. dem Rotor der Zentrifuge sowie gegen Verschmutzung der benutzten optischen Systeme, gegen systematische Leistungsabfälle vom Sender und Empfänger der Detektionseinrichtung unempfindlich ist und daß somit eine regelmäßige Justierung auf einen Nullpunkt entfallen kann.

Bei einer Auslegung der Abtastbereiche als Meßfenster mit einem Durchmesser von je etwa 1 mm und einem Abstand der Abtastbereiche voneinander von ebenfalls je 1 mm ergibt sich bei Verwendung mit einer an sich bekannten Blutzentrifuge eine Folgefrequenz der Eins-Signale im kHz-Bereich vorzugsweise zwischen 1 und 10 kHz. Daraus ergibt sich der Vorteil, daß eine preisgünstige und einfache Detektionsvorrichtung verwendet werden kann. Als besonders vorteilhaft kann als Abtasteinrichtung eine optische Anordnung eingesetzt werden, die im Infrarotbereich mit den entsprechenden Sendern und Empfängern arbeitet. Hierdurch werden Störungen durch Tageslicht, das insbesondere durch ein Beobachtungsfenster für den Separationsvorgang fallen kann, eliminiert. Ein weiterer besonderer Vorteil ergibt sich aus der relativen Anordnung von Abtastbereichen, die an einer Radialfläche der Separationskammer angeordnet sind und der Abtasteinrichtung. Wenn die Abtasteinrichtung starr gelagert ist, rotiert die Reihe von Abtastbereichen in Form von Abtastfenstern, welche auf einer der Abtasteinrichtung gegenüber liegenden Radialfläche der Separationskammer mit der Separationskammer drehfest verbunden angebracht ist, wobei jedoch auch eine kinematische Vertauschung von Abtasteinrichtung und Abtastbereichen möglich ist.

Ein weiterer Vorteil der Erfindung ergibt sich daraus, daß die Erfassung der Phasengrenze nicht an das drehende Teil der Separationskammer unmittelbar gebunden ist. Bei einer guten Auflösung ist es möglich, mit lediglich einer Gabellichtschranke anstelle einer Vielzahl von Gabellichtschranken auszukommen, wobei die Anzahl der strahlendurchlässig ausgebildeten Abtastbereiche im Hinblick auf die erforderliche Auflösung gewählt werden kann. Die erfindungsgemäße Vorrichtung kann zusammen mit verschieden ausgebildeten Separationskammern verwendet werden, wobei die Phasengrenze durch geeignete Wahl der Reihe der Abtastbereiche eingestellt werden kann. Es ist nicht notwendig, die Abtastbereiche in einer linearen Reihe anzuordnen. Vielmehr kann beispielsweise eine hohe Auflösung in einem kritischen Bereich dadurch erreicht werden, daß der Winkel der Reihe der Abtastbereiche in diesem Bereich gegenüber der Phasengrenze besonders klein ist, in unkritischen Bereichen jedoch relativ groß ist, so daß sich eine S-förmige Gesamtanordnung ergibt. Dadurch wird erreicht, daß einerseits die Phasengrenze auf einen genau bestimmten Wert gehalten wird und andererseits der erfaßte Bereich groß ist. Der Hauptvorteil der Erfindung besteht somit darin, daß bereits mit einem einzigen Abtastbereich die gewünschte Lösung der Aufgabe erreicht wird, indem eine digitale Eins- oder Null-Entscheidung zur Regelung benutzt wird und der Ist-Wert um diese Ja-Nein-Entscheidung pendelt. Der Abtaststrahl für die Abtastbereiche kann wahlweise balken- oder schlitzförmig ausgebildet werden, indem entweder mit sphärischen Linsen und einem Spalt der Lichtstrahl erzeugt wird oder aber mit einer Zylinderlinse der Lichtbalken unmittelbar erzeugt wird. Ferner kann eine Anordnung der Abtastbereiche zwischen konzentrischer und nicht konzentrischer bis radialer Anordnung unterschieden werden. Bei der konzentrischen Anordnung ist als Abtaststrahl nur ein Strahl mit rundem Querschnitt, d.h. ein leicht zu erzeugender Strahl nötig; jedoch muß die Phasengrenze in der Separationskammer nicht konzentrisch sein, was nur bei kontinuierlichem Fluß möglich ist und außerdem eine Abhängigkeit von den Flußraten und der Geometrie beinhaltet. Dagegen ist bei der nicht konzentrischen Anordnung der Abtastbereiche die Erzeugung eines Lichtbalkens nötig, wozu eine geringere Lichtintensität verwendbar ist. Ferner kann vorteilhafterweise anstelle der Erzeugung der Abtastbereiche durch eine "Maske" auf der Separationskammer auch dadurch erreicht werden, daß diese durch Triggerung des Senders oder Empfängers in diesem Bereich erzeugt werden, was auch über einen räumlich gesteuerten Lichtstrahl möglich ist. Dies bedeutet, daß als besonderer Vorteil der Erfindung festgestellt werden kann, daß mit einem einzigen räumlich feststehenden Abtaststrahl eine räumliche Auflösung der Trenngrenze möglich ist, indem hintereinander folgende Signale verschiedene räumliche Positionen beschreiben.

Weitere Vorteile, Merkmale und Einzelheiten der Erfindung werden in nachstehender Beschreibung anhand der Zeichnung näher erläutert.

Darin zeigt:

Fig. 1a + b eine schematische Schnittansicht einer ersten Ausführungsform der Meßanordnung gemäß der Erfindung;
Fig. 2 eine schematische Ansicht eines Blockdiagrammes einer Schaltung für die Ausführungsform nach Fig. 1;
Fig. 3 eine schematische Ansicht eines Teiles der Meßanordnung und eines Teiles einer Separationskammer;
Fig. 4 eine schematische Ansicht einer Separationskammer in einer weiteren Ausführungsform;
Fig. 5 eine schematische Ansicht eines Ausschnittes aus der Separationskammer nach Fig. 4;
Fig. 6 eine graphische Darstellung des zeitlichen Verlaufes des Meßsignales und des Erfassungssignales mit 8 Eins-Impulsen des Eins-Signales, und
Fig. 7 eine Darstellung des zeitlichen Verlaufes des Meßsignales und des Erfassungssignales mit Impulsen des Eins-Signales.

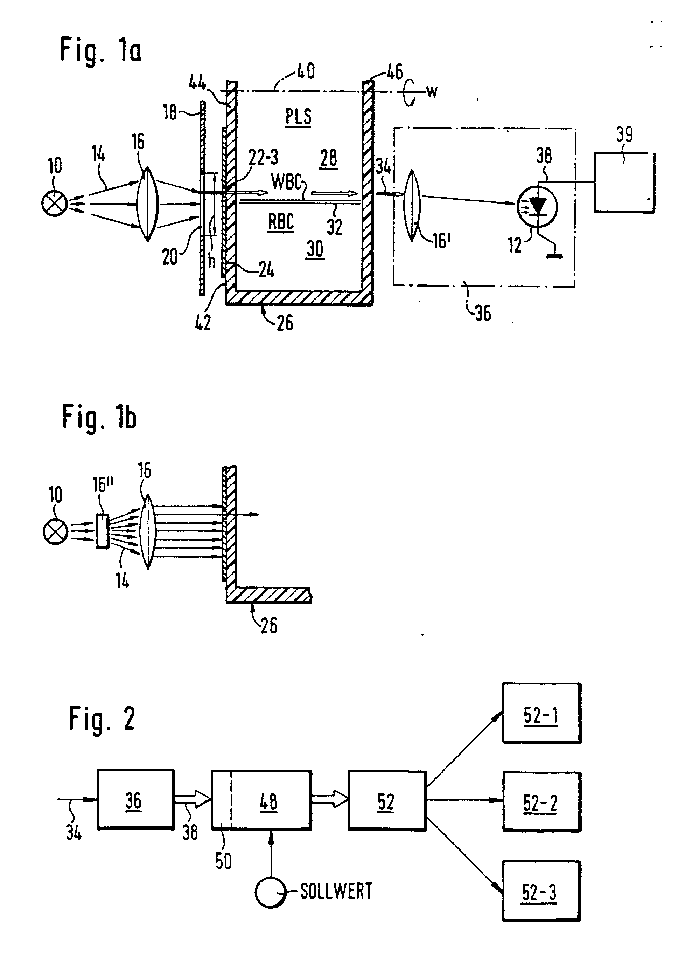

In Fig 1a + 1b eine Meßanordnung für eine erfindungsgemäße Vorrichtung dargestellt, anhand welcher der Strahlengang von einer Strahlenquelle 10 zu einer Detektionseinrichtung 12 näher erläutert wird. Die Strahlenquelle 10 ist als Senderdiode speziell als Infrarotdiode ausgebildet und sendet einen Abfragestrahl 14 aus, welcher von einer Linsenanordnung 16 zur Intensitätserhöhung fokussiert wird. Im Strahlengang hinter der Linsenanordnung 16 ist eine als Abtast-Schlitz ausgebildete Abtasteinrichtung 18 vorgesehen, die ein Fenster 20 mit einer Höhe h aufweist. Durch eine Linsenanordnung 16 wird der Abfragestrahl 14 in einer Ebene fokussiert, in welcher Abtastbereiche 22 liegen, von welchem ein Abtastbereich 22-3 dargestellt ist. Die Abtastbereiche 22 sind als Abtastfenster in einer Schirmvorrichtung 24 vorgesehen, welche undurchlässig für den Abfragestrahl 14 ist. Die Schirmvorrichtung 24 ist auf einem Rotor oder einer Separationskammer 26 befestigt, welche aus für den Abfragestrahl 14 durchlässigem Material vorzugsweise aus Kunststoff, besteht. Eine Separationsvorrichtung wird hier als Separationskammer bezeichnet. In der Separationskammer 26 befindet sich ein erstes Medium 28 und ein zweites Medium 30. Das erste Medium 28 besteht in den dargestellten Ausführungsbeispiel aus Blutplasma PLS und weißen Blutzellen WBC. Das zweite Medium 30 besteht aus roten Blutzellen RBC. Das erste Medium 28 ist für den Abfragestrahl 14 durchlässig während das zweite Medium 30 für den Abfragestrahl 14 weniger durchlässig ist. In der in Fig. 1 dargestellten Stellung der Separationskammer 26 befindet sich der Abtastbereich 22-3 in Deckung mit der Abtasteinrichtung 18. Da der Abtastbereich 22-3 an einer dem ersten Medium 28 zugeordneten Stelle oberhalb der Phasengrenze 32 vorgesehen ist, wird das den Abtastbereich 22-3 durchtretende Licht 34 durch das erste Medium 28 hindurchgehen und der Erfassungseinrichtung 36 zugeführt. In der Detektionsvorrichtung 12, die in der dargestellten Ausführung als Photodiode oder Phototransistor ausgebildet ist, wird die Lichtintensität 34 in ein Meßsignal 38 umgewandelt. Das Meßsignal 38 wird einer Regeleinrichtung 39 zugeleitet.

Die Separationskammer 26 ist um eine Achse 40 drehbar, so daß mittels derer eine Lagerung und Führung der Separationskammer 26 erfolgt. Durch Drehung der Separationskammer 26 mit hoher Winkelgeschwindigkeit w um die Achse wird eine Zentrifugalkraft auf das in ihr befindliche Gemisch von Medien ausgeübt, so daß sich die in Fig. 1 dargestellte Verteilung ergibt. Die roten Blutzellen RBC weisen eine höhere spezifische Dichte als die weißen Blutzellen WBC auf, welche wiederum schwerer als das Blutplasma PLS sind. Neben dem dargestellten Abtastbereich 22-3 sind weitere Abtastbereiche räumlich versetzt angeordnet, welche insgesamt einen möglichen Erfassungsbereich für die Lage der Phasengrenze 32 mit der Höhe h abdecken. Wenn die Phasengrenze 32 in Fig. 1 unterhalb des jeweils betrachteten Abtastbereiches liegt, wird die Lichtintensität 34 als Eins-Signal 70 abgegeben, während die Lichtintensität 34 zu einem Null-Signal wird, wenn die Phasengrenze 32 oberhalb des betrachteten Abtastbereiches 22 liegt. Die Schirmvorrichtung 24 ist kreisringförmig auf einer Radialfläche 42 der Separationskammer 26 angebracht, so daß die ganze Separationskammer bis auf das Detektionsfenster abgedeckt ist. Selbstverständlich ist es jedoch auch möglich, eine Stirnwand 44 in der Separationskammer 26 als Schirmvorrichtung 24 auszubilden. Ebenso ist es auch möglich, die Meßanordnung bestehend aus der Abtasteinrichtung 18 und der Schirmvorrichtung 24 auf der anderen Stirnwand 46 der Separationskammer 26 anzuordnen. In diesem Falle durchtritt der Abfragestrahl 14 zunächst das erste Medium 28 bzw. wird von dem zweiten Medium 30 absorbiert und trifft dann auf die Abtastbereiche 22, welche sodann von der Abtasteinrichtung 18 abgetastet werden und das Meßsignal 34 erzeugen. Ebenso kann eine kinematische Vertauschung dergestalt vorgenommen werden, daß nicht die Abtasteinrichtung 18 sondern die Abtastbereiche 22 fest mit der Stützvorrichtung für die Lagerung der Separationskammer 26 verbunden sind, während die Abtasteinrichtung 18 anstelle der Abtastbereiche 22 drehfest mit der Separationskammer 26 verbunden sind. In diesem Falle ist es beispielsweise möglich, die Abtastbereiche 22 mittels einzelnen Fasern eines Glasfaserkabels von der Strahlenquelle 10 herzuleiten, wobei die Linsenanordnung 16 und die Schirmvorrichtung 24 entfallen können.

In Fig. 2 bzw. in weiteren Fig. der Zeichnung sind gleiche bzw. einander entsprechende Teile mit entsprechenden Bezugs-Zeichen versehen und werden nicht näher beschrieben. Das Erfassungsignal 38 wird durch eine Signalaufbereitung wie beispielsweise einen Schmitt-Trigger erzeugt und dann einer Zähleinrichtung 48 zugeleitet, wobei die Eingangsstufe der Zählvorrichtung einen Diskriminatorschaltkreis 50 aufweist, in welchem entschieden wird, ob der Impuls des Erfassungssignales 30 ein Null-Signal oder ein Eins-Signal ist. Hierzu weist der Diskriminator-Schaltkreis in an sich bekannter Weise eine Triggerschwelle auf, die auch einstellbar ausgelegt sein kann. In der Zähleinrichtung 48 wird die Anzahl der Eins-Signale pro Meßzyklus gezählt, wobei ein Meßzyklus eine Umdrehung der Separationskammer ist und mit einen Sollwert verglichen. Das vergleichsergebnis wird als Regeldifferenz zur Flußratensteuerung der Mengensteuervorrichtung 52 zugeleitet, welche Förderpumpen 52-1, 52-2, 52-3 aufweist. Die Förderpumpen wirken in an sich bekannter Weise als Schlauchpumpen auf Anschlüsse für das Blutplasma PLS, dir weißen Blutzellen WBC und die roten Blutzellen RBC. Die Mengensteuervorrichtung 52 steuert die Förderpumpen 52-1 bis 52-3 in der Weise, daß die Phasengrenze 32 entsprechend der Anzahl der pro Meßzyklus gezählten Eins-Signale in der Zähleinrichtung 48 auf den gewünschten Sollwert eingeregelt wird, wenn eine Abweichung in die eine oder andere Richtung festgestellt worden ist.

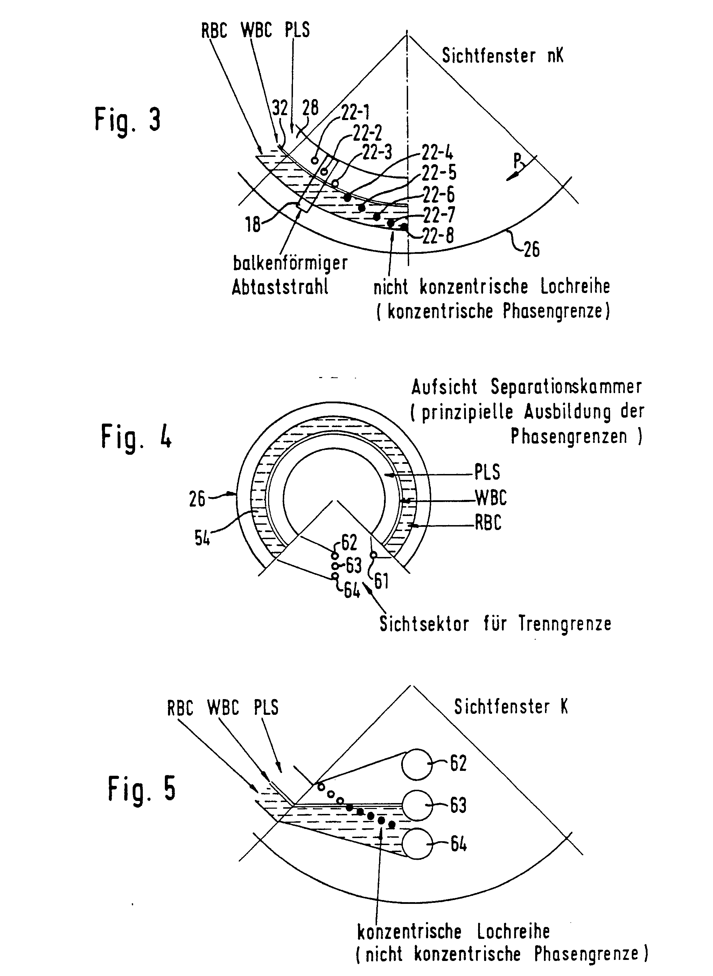

In Fig. 3 ist eine Ansicht der Reihe von Abtastbereichen 22 dargestellt. Die Abtastbereiche 22 sind in einem Bereich vorgesehen, an welchem die Phasengrenze 32 konzentrisch bezüglich der Drehachse der Zentrifuge verläuft. Die Reihe der Abtastbereiche 22 muß erfindungsgemäß die Phasengrenze schneiden, so daß sie in der in Fig. 3 dargestellten Ausführungsform nicht konzentrisch angeordnet ist. Die Abtastbereiche 22-1 bis 22-3 decken in der dargestellten Ausführungsform das erste Medium 28 ab, während die Abtastbereiche 22-4 bis 22-8 das zweite Medium 30 abdecken. Bei Drehung der Separationskammer 26 in Richtung des Pfeiles P werden von der Abtasteinrichtung 18 nacheinander die Abtastbereiche 22-1 bis 22-8 abgetastet. Die drei ersten Abtastbereiche 22 erzeugen ein Eins-Signal als Meßsignal und sind daher als Leerkreise dargestellt. Die Abtastbereiche 22-4 bis 22-8 erzeugen ein Null-Signal als Meßsignal 34 und sind daher als schwarze Vollkreise dargestellt. Der Durchmesser der Abtastbereiche 22 beträgt 1 mm, und der Abstand der Abtastbereiche 22 voneinander beträgt ebenfalls 1 mm. Da die Abtasteinrichtung 18 eine Schlitzbreite und damit eine Auflösung von etwa 1 mm aufweist, wird bei Drehung der Separationskammer 26 in Richtung des Pfeiles P eine eindeutige Hell/Dunkel-Steuerung erreicht und in einem Meßzyklus eine Folge von drei Eins-signalen in Impulsform abgegeben. Bei geringeren Anforderungen an die Auflösung kann der Durchmesser der Abtastbereiche 22 vergrößert werden, so daß eine geringere Empfindlichkeit der Erfassungseinrichtung 36 bzw. eine geringere Intensität des Abfragestrahles 14 erforderlich ist.

In der in Fig. 3 dargestellen Ausführungsform der erfindungsgemäßen Vorrichtung ist die Abtasteinrichtung 18 als balkenförmiger Abtaststrahl ausgebildet, der durch eine Schlitzblende unmittelbar hinter der Strahlenquelle 10 erreicht wird, so daß ein Strahlenbalken durch die Linsenanordnung 16 auf die Schirmvorrichtung 25 projiziert wird.

In Fig. 4 ist eine Separationskammer insgesamt schematisch dargestellt. Über einen Anschluß 61 wird Vollblut WB in die Separationskammer eingeleitet. Infolge der Zentrifugalkraft werden die Bestandteile des Vollblutes WB nach und nach separiert, wobei hier unter Separieren das Überführen eines Mischmediums, welches mindestens zwei Medien räumlich gleich verteilt enthält, in mindestens zwei Medien verstanden wird, in welchen je ein Bestandteil überwiegt.

Das - theoretisch erreichbare - Ziel des Separierens ist die vollständige Trennung der Bestandteile voneinander während des kontinuierlichen Betriebs. Während der Verweildauer in dem ringförmigen Separationskanal 54 wird das Vollblut in seine Bestandteile Plasma PLS, weite Blutzellen WBC und rote Blutzellen RBC zerlegt. Für diese Bestandteile sind Entnahmeanschlüsse 62, 63 bzw. 64 vorgesehen, denen idealerweise je nur die entsprechenden Bestandteile in reiner Form zugeleitet werden sollen. Da der Anteil der weißen Blutzellen WBC an dem Gesamtblut WB relativ gering ist, ist insbesondere die Lage der Phasengrenze an diesem Anschluß kritisch und erfordert eine sorgfältige Regelung, die mit der Erfindung erreicht wird.

Da Vollblut WB kontinuierlich an den Anschluß 61 zugeführt wird, ist auch eine kontinuierliche Förderung der Blutbestandteile an den Anschlüssen 62, 63 und 64 erforderlich. Die Lage der Phasengrenze ergibt sich jeweils aus dem Verhältnis der Förderraten. Mit dem erfindungsgemäßen Verfahren gelingt es, eine große Genauigkeit in der Regelung zu erreichen, so daß auch weiße Blutzellen WBC gewonnen werden können, die insgesamt nur etwa 0,5 % bis 2 % des Vollblutes WB ausmachen. Ferner wird erreicht, daß die zu gewinnende Blutkomponente so rein wie möglich ist und nahezu vollständig gewonnen wird, so daß die erforderliche Menge des Gesamtblutes WB relativ gering bleiben kann. In Fig. 5 ist eine weitere mögliche Ausführungsform der Meßanordnung schematisch dargestellt. In der dargestellten Ausführungsform wird im Bereich der Anschlüsse 62-64 die Lage der Phasengrenze erfaßt. An dieser Stelle ist die Phasengrenze nicht konzentrisch. Die nichtkonzentrische Ausbildung einer Phasengrenze kann im nichtstationären Betrieb erreicht werden, d.h. durch Förderung der Blutbestandteile durch Pumpen und Abziehen durch die Anschlüsse 62, 63 und 64. Schräg zu der Phasengrenze ist wiederum eine als Lochreihe ausgebildete Reihe von Abtastbereichen 22 vorgesehen. Der besondere Vorteil dieser Ausführungsform besteht darin, daß die Abtasteinrichtung 18 auch einen kreisförmigen Querschnitt von der Größe der Abtastbereiche 22 aufweisen kann, so daß eine maximale Lichtintensität für jeden Abtastbereich 22 zur Verfügung steht. Dies wird dadurch ermöglicht, daß die Lochreihe konzentrisch um die Drehachse der Zentrifuge angeordnet ist.

Ein weiterer besonderer Vorteil der Ausführungsform mit balken- bzw. schlitzförmiger Abtasteinrichtung 18 ist ihre Unempfindlichkeit gegen verschiedene Fehler, die z. B. durch nichtzentrische Rotationen, Dejustierungen der Optik oder durch Unwucht verursacht wird.

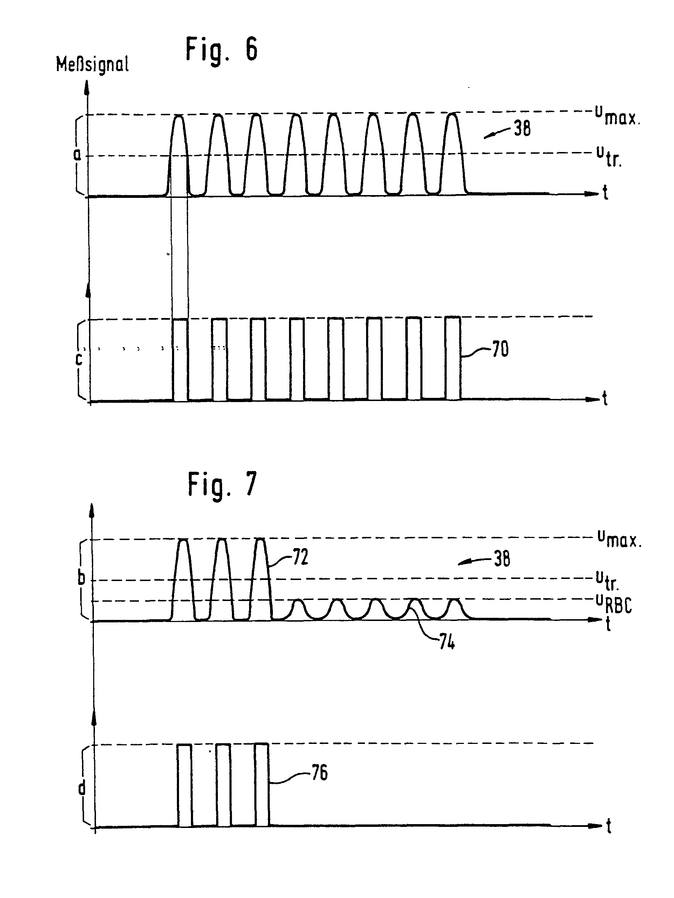

In Fig. 6 ist ein Signalverlauf dargestellt, der einem Erfassungssignal mit 8 Eins-Signalen entspricht. Ein derartiges Erfassungssignal kommt zustande, wenn das erste optisch dünnere Medium 28 den gesamten Erfassungsbereich abdeckt. Bei Einstellung einer Triggerschwelle auf eine Signalamplitude $u_{tr}$ kann mit Hilfe der Fassung mit dem Diskriminatorschaltkreis 50 das Signal 70 erzeugt werden.

In Fig. 7 ist der Signalverlauf der erfaßten Signale in einem Betriebszustand dargestellt, welcher auch in den Fig. 3 und 4 dargestellt ist. Entsprechend dem Vorliegen von Blutplasma PLS an den ersten 4 Abtastbereichen 22-1 bis 22-3 können vier Eins-Signale 72 erzeugt werden, an die sich entsprechend dem Vorliegen der roten Blutzellen RBC vier Null-Signale anschließen. Mit Hilfe des Diskriminatorschaltkreises 50 können beim Anliegen des in Fig. 7 dargestellten Erfassungssignales 38 die Signale gemäß dem Signalverlauf 76 erzeugt werden. Das Amplitudenverhältnis des Erfassungssignales 38 zwischen den Eins-Signalen 72 und den Null-Signalen 74 beträgt mehr als 20, so daß die Triggerschwelle $u_{tr}$ unkritisch einzustellen ist. Selbstverständlich ist es ebenso möglich, flankenabhängig zu triggern.

Neben den dargestellten Ausführungen ist es beispielsweise auch möglich, die erfindungsgemäße Vorrichtung in Verbindung mit Spiralzentrifugen oder anderen rotierenden Systemen einzusetzen. Ebenso ist es möglich, außer auf Infrarot-Lichtstrahlen als Abfragestrahl 14 auch auf andere Strahlen zurückzugreifen und außer den beschriebenen Medien auch weitere Medien zu trennen, auch solche, die sich in anderen Aggregatszuständen befinden. Ferner ist es möglich, das Entmischen bzw. Separieren durch andere physikalische Kräfte als durch zentrifugalkräfte herbeizuführen.

Eine weitere Ausführungsform ist in Fig. 1b dargestellt, wo der durch die Abtasteinrichtung 18 mit einem Fenster 20 erzeugbare Lichtbalken mit einer Länge h durch eine Zylinderlinse 16″ erzeugt wird, so daß die Abtastbereiche wie aus Fig. 3 ersichtlich, von dem balkenförmigen Abtaststrahl abgetastet und die Strahlen nach der Separationskammer 26 je nach Durchdringen des jeweiligen Mediums eine größere oder kleinere Lichtintensität 34 aufweisen, wie analog in Fig. 1a dargestellt.

Natürlich kann eine weitere Ausführungsform dergestalt sein, daß die Erfassungsvorrichtung 36 und die Strahlenerzeugung gemäß Fig. 1a oder Fig. 1b auf derselben Seite der Separationskammer 26 angeordnet sind. In diesem Falle müßte die rückwärtige Stirnwand 46 der Separationskammer 26 eine in das Innere der Separationskammer gerichtete Spiegelfläche aufweisen, daß die durch die verschiedenen Abtastbereiche 22-1 bis 22-8 hindurchtretenden Lichtstrahlen an dieser Spiegelfläche reflektiert und durch die zugehörigen Abtastbereiche hindurch zu der auf derselben Seite angeordneten Erfassungsvorrichtung 36 reflektiert werden. Bei einer solchen Ausführungsform können die Abtastbereiche 22 ebenso wie bei den weiter oben beschriebenen Ausführungsformen ebenfalls an einer rückseitigen Stirnwand 46 ausgebildet werden, so daß nicht wie bei den weiter oben beschriebenen Ausführungsformen die Auflösung des Lichtbalkens in einzelne Abtastbereiche bereits an der vorderen Stirnseite 44 erfolgt, sondern erst an der rückseitigen Stirnseite 46. Bei einer Ausführungsform, bei welcher die rückseitige Stirnseite 46 verspiegelt ist, könnten die einzelnen Abtastbereiche 22 als einzelne Spiegelflächen oder in Form von einer maskenförmig abgedeckten Gesamtspiegelfläche ausgebildet sein.

**Patentansprüche**

1. Verfahren zum Separieren von strömungsfähigen und vermischten Medien in einer Separationsvorrichtung, insbesondere in einer Zentrifuge, von denen mindestens ein Medium besser und mindestens ein Medium unterscheidbar weniger strahlendurchlässig ist bei welchem eine zwischen den separierten Medien sich ausbildende Phasengrenze dadurch gemessen wird, daß die im Bereich einer Meßvorrichtung gesendeten Strahlen nach Durchlaufen eines von den separierten Medien durchströmten Erfassungsbereiches ausgewertet werden und das daraus gewonnene Meßergebnis zu einer Regelabweichung verarbeitet und auf eine Reglereinrichtung geleitet wird, mit welcher die Lage der Phasengrenze um eine Soll-Lage geregelt wird, dadurch gekennzeichnet, daß mindestens in demjenigen Abschnitt des Meßeinrichtungsbereiches mindestens ein diskreter Strahlenweg ausgebildet wird, in welchem der Erfassungsbereich den Bereich der Meßeinrichtung durchläuft, wobei der Strahlenweg in dem besser strahlendurchlässigen Medium ausgebildet wird.

2. Verfahren nach Anspruch 1, dadurch gekennzeichnet, daß mindestens zwei diskrete Strahlenwege ausgebildet werden, in welchen der Erfassungsbereich den Bereich der Meßvorrichtung durchläuft und daß mindestens der eine Strahlenweg in dem besser strahlendurchlässigen Medium und der andere Strahlenweg in dem weniger strahlendurchlässigen Medium nahe der Phasengrenze ausgebildet wird und daß die mit den Strahlen durch das besser strahlendurchlässige Medium von den Abtastbereichen gebildeten Strahlenwege im Verhältnis zu der Gesamtzahl der Abtastbereiche pro Meßzyklus erfaßt und ausgewertet werden.

3. Verfahren nach Anspruch 2, dadurch gekennzeichnet, daß nur ein Strahlenweg zur gleichen Zeit in dem Bereich der Meßeinrichtung erfaßt wird.

4. Verfahren nach einem der Ansprüche 1 bis 3, dadurch gekennzeichnet, daß die in einem Meßzyklus das durchlässigere Medium und die Abtastbereiche durchtretenden Strahlen detektiert und die Anzahl der Abtastbereiche gezählt werden.

5. Verfahren nach Anspruch 4, dadurch gekennzeichnet, daß vor dem Start eines Meßzyklus eine Zähleinrichtung zurückgesetzt und mit Beginn des Meßzyklus gestartet wird, und daß nach dem Ablauf des Meßzyklus das Zählergebnis als Meßergebnis ausgewertet und der Reglereinrichtung zugeleitet wird.

6. Verfahren nach einem der vorhergehenden Ansprüche, dadurch gekennzeichnet, daß über eine auf die Medien wirkende Flußratensteuereinrichtung die Lage der Phasengrenze zwischen den Medien auf die Soll-Lage geregelt wird.

7. Vorrichtung zur Durchführung des Verfahrens nach den Ansprüchen 1 bis 6, mit einer Separationskammer, insbesondere mit einer Zentrifuge, mit mindestens einem strahlendurchlässigen Bereich, mit mindestens einer Strahlenquelle, einer Erfassungseinrichtung für die Lage der Phasengrene und einer Einrichtung zur Regelung der Lage der Phasengrenze auf eine Soll-Lage, dadurch gekennzeichnet, daß vor der Erfassungseinrichtung (36) mindestens ein diskreter, von einem Abfragestrahl (14) beaufschlagbarer Abtastbereich (22) für das Erfassen der Strahlendurchlässigkeit der Medien (28, 30) als Einzelstrahlenweg ausgebildet ist.

8. Vorrichtung nach Anspruch 7, dadurch gekennzeichnet, daß vor der Erfassungseinrichtung (36) mindestens zwei diskrete von einem Abfragestrahl (14) beaufschlagbare Abtastbereiche (22) und zwar mindestens je ein Abtastbereich (22) auf je einer Seite der Soll-Lage der Phasengrenze (32) angeordnet ist.

9. Vorrichtung nach Anspruch 8, dadurch gekennzeichnet, daß vor den relativ zur Abtasteinrichtung (18) drehbaren Abtastbereichen (22) eine als Schlitzmaske ausgebildeten Abtasteinrichtung (18) angeordnet ist.

10. Vorrichtung nach Anspruch 9, dadurch gekennzeichnet, daß die Meßeinrichtung als Detektionseinrichtung (12) für Eins-Signale (72) und Null-Signale (74) ausgebildet ist.

11. Vorrichtung nach Anspruch 10, dadurch gekennzeichnet, daß eine Zähleinrichtung (48) an der Detektionseinrichtung angeschlossen ist.

12. Vorrichtung nach Anspruch 11, dadurch gekennzeichnet, daß eine Startmarke oder ein Triggerfenster für die Zähleinrichtung (48) vorgesehen ist.

13. Vorrichtung nach Anspruch 7, dadurch gekennzeichnet, daß die Separationskammer (26) als Rotor einer Zentrifuge ausgebildet ist.

14. Vorrichtung nach den Ansprüchen 8 bis 13, dadurch gekennzeichnet, daß die Abtastbereiche (22) auf einer Radialfläche (42) der Separationskammer (26) mit der Separationskammer (26) drehbeweglich ausgebildet sind und die Abtasteinrichtung (18) der Radialfläche (42) benachbart oder gegenüberliegend feststehend angeordnet ist.

15. Vorrichtung nach einem der Ansprüche 8 bis 14, dadurch gekennzeichnet, daß die Abtastbereiche (22) nacheinander angeordnet eine Linie bilden, die die Soll-Linie der Phasengrenze (32) schneidet.

16. Vorrichtung nach einem der Ansprüche 8 bis 15, dadurch gekennzeichnet, daß die Abtastbereiche (22) in einem Abstand voneinander angeordnet sind, der dem Durchmesser der Abtastbereiche (22) entspricht.

17. Vorrichtung nach einem der Ansprüche 8 bis 16, dadurch gekennzeichnet, daß die Abtastbereiche (22) einen Durchmesser von 1 mm aufweisen.

18. Vorrichtung nach einem der Ansprüche 15 bis 17, dadurch gekennzeichnet, daß die von den Abtastbereichen (22) gebildete Linie im Bereich der Regel-schwankungsbreite der Soll-Linie einen kleineren Winkel mit der Soll-Linie einschließt, als außerhalb dieses Bereiches, so daß sie S-förmig ausgebildet ist.

19. Vorrichtung nach einem der Ansprüche 8 bis 18, dadurch gekennzeichnet, daß die Abtasteinrichtung (18) als balken- oder schlitzförmige Maske quer zu der Phasengrenze (32) angeordnet ist.

20. Vorrichtung nach einem der Ansprüche 7 bis 19, dadurch gekennzeichnet, daß die Abtasteinrichtung (18) eine Breite aufweist die dem Durchmesser der Abtastbereiche (22) entspricht.

21. Vorrichtung nach einem der Ansprüche 7 bis 20, dadurch gekennzeichnet, daß die Strahlenquelle (10) und die Erfassungseinrichtung (36) auf derselben Seite der Separationskammer (26) angeordnet sind und daß die rückseitige Stirnwand (46) der Separationskammer (26) verspiegelt ist.

22. Vorrichtung nach Anspruch 21, dadurch gekennzeichnet, daß die Abtastbereiche (22) in Form von Spiegelbereichen auf der rückseitigen Stirnwand (46) ausgebildet sind.

**Claims**

1. Method of separating flowable and mixed media in a separation apparatus, in particular in a centrifuge, of which at least one medium is better permeable to the radiation and at least one medium distinguishably less permeable, in which a phase boundary forming between the separated media is measured in that the beams emitted in the region of a measuring device are evaluated after traversing a detection area through which the separated media flow and the measuring result obtained therefrom is processed to a control deviation and conducted to a control means with which the position of the phase boundary is controlled about a desired position, characterized in that at least one discrete beam path is formed at least in that portion of the measuring means region in which the detection region passes through the region of the measuring means, the beam path being formed in the more radiation-permeable medium.

2. Method according to claim 1 characterized in that at least two discrete beam paths are formed in which the detection region passes through the region of the measuring device and that at least the one beam path in the more radiation-permeable medium and the other beam path in the less radiation-permeable medium is formed near the phase boundary and that the beam paths formed by the scanning regions with the beams through the more radiation-permeable medium are detected and evaluated in relationship to the total number of scanning regions per measuring cycle.

3. Method according to claim 2, characterized in that only one beam path is detected at the same time in the region of measuring arrangement.

4. Method according to any one of claims 1 to 3, characterized in that the beams passing through the more permeable medium and the scanning regions in a measuring cycle are detected and the number of scanning regions counted.

5. Method according to claim 4, characterized in that before the start of a measuring cycle a counting means is reset and started with the commencement of the measuring cycle and that after expiry of the measuring cycle the resulting count is evaluated as measurement result and supplied to the control means.

6. Method according to any one of the preceding claims, characterized in that via a flow rate control means acting on the media the position of the phase boundary between the media is regulated to the desired position.

7. Apparatus for carrying out the method according to claims 1 to 6, comprising a separation chamber, in particular with a centrifuge, at least one radiation-permeable region, at least one radiation source, a detection means for the position of the phase boundary and a means for regulating the position of the phase boundary to a desired position, characterized in that in front of the detection means (36) at least one discrete scanning region (22) which can be subjected to an interrogation beam (14) for the detection of the radiation permeability of the media (28, 30) is formed as individual beam path.

8. Apparatus according to claim 7, characterized in that in front of the detection means (36) at least two discrete scanning regions (22) which can be subjected to an interrogation beam (14) are disposed, at least one scanning region (22) being disposed on each side of the desired position of the phase boundary (32).

9. Apparatus according to claim 8, characterized in that in front of the scanning regions (22) rotatable relatively to the scanning means (18) a scanning means (18) is disposed as slit mask.

10. Apparatus according to claim 9, characterized in that the measuring arrangement is formed as detection arrangement (12) for one signals (72) and zero signals (74).

11. Apparatus according to claim 10, characterized in that a counting means (48) is connected to the detection arrangment.

12. Apparatus according to claim 11, characterized in that a start mark or trigger window is provided for the counting means (48).

13. Apparatus according to claim 7, characterized in that the separation chamber (26) is formed as rotor of a centrifuge.

14. Apparatus according to claims 8 to 13, characterized in that the scanning regions (22) are formed on a radial surface (42) of the separation chamber (26) for rotation with the latter and the scanning means (18) is disposed stationary adjacent or opposite the radial surface (42)

15. Apparatus according to any one of claims 8 to 14, characterized in that the scanning regions (22) form in succession a line which intersects the desired line of the phase boundary (32).

16. Appartus according to any one of claims 8 to 15, characterized in that the scanning regions (22) are disposed at a distance from each other which corresponds to the diameter of the scanning regions (22).

17. Apparatus according to any one of claims 8 to 16, characterized in that the scanning regions (22) have a diameter of 1 mm.

18. Apparatus according to any one of claims 15 to 17, characterized in that the line formed by the scanning regions (22) forms in the area of the control fluctuation width of the desired line with the latter a smaller angle than outside said area so that said line is S-shaped.

19. Apparatus according to any one of claims 8 to 18, characterized in that the scanning means (18) is disposed as bar-like or slit-like mask transversely to the phase boundary (32).

20. Apparatus according to any one of claims 7 to 19, characterized in that the scanning means (18) has a width corresponding to the diameter of the scanning regions (22).

21. Apparatus according to any one of claims 7 to 20, characterized in that the radiation source (10) and the detection arrangement (36) are disposed on the same side of the separation chamber (26) and the rear end wall (46) of the separation chamber (26) has a mirror surface.

22. Apparatus according to claim 21, characterized in that the scanning regions (22) are formed as mirror regions on the rear end wall (46).

**Revendications**

1. Procédé pour séparer des milieux fluides et mélangés dans un dispositif de séparation, en particulier dans une centrifugeuse, dont au moins un milieu est plus transparent aux rayons et au moins un milieu est moins transparent, à la différence du premier, dans lequel une limite de phase, qui se forme entre les milieux séparés, est mesurée par le fait que les rayons émis dans la région d'un dispositif de mesure sont analysés après avoir traversé une zone de captation parcourue par les milieux séparés et le résultat de mesure tiré de cette analyse est traité pour constater un écart de régulation et transmis un dispositif de régulation à l'aide duquel la position de la limite de phase est réglée dans le voisinage d'une position de consigne, caractérisé en ce qu'au moins dans ce segment de la région du dispositif de mesure, il se forme au moins un trajet de rayon discret dans lequel la région de captation parcourt la région du dispositif de mesure, le trajet du rayon se formant dans le milieu le plus transparent aux rayons.

2. Procédé selon la revendication 1, caractérisé en ce qu'on forme au moins deux trajets de rayons discrets dans lesquels la région de captation traverse la région du dispositif de mesure, en ce qu'au moins l'un des trajets de rayons est formé dans le milieu le plus transparent aux rayons et l'autre trajet de rayon est formé dans le milieu le moins transparent aux rayons, à proximité de la limite de phase, et en ce que les trajets de rayons formés par les zones d'exploration avec les rayons qui ont passé à travers le milieu le plus transparent aux rayons sont captés et analysés sous l'aspect du rapport de leur nombre au nombre total des zones d'exploration contenues dans chaque cycle de mesure.

3. Procédé selon la revendication 2, caractérisé en ce qu'un seul trajet de rayon est capté à un moment donné dans la région du dispositif de mesure.

4. Procédé selon les revendications 1 à 3, caractérisé en ce que les rayons qui traversent le milieu le plus transparent et les zones d'exploration dans un cycle de mesure sont détectés et le nombre des zones d'exploration est compté.

5. Procédé selon la revendication 4, caractérisé en ce que, avant le départ d'un cycle de mesure, un dispositif de comptage est remis à zéro et mis en marche au début du cycle de mesure et en ce que, après écoulement du cycle de mesure, le résultat du comptage est exploité pour servir de résultat de mesure et transmis au dispositif de régulation.

6. Procédé selon une des revendications précédentes, caractérisé en ce que la position de la limite de phase entre les milieux est réglée sur la position de consigne par l'intermédiaire d'un dispositif de commande des débits qui agit sur les milieux.

7. Dispositif pour la mise en oeuvre du procédé selon les revendications 1 à 6, comprenant une chambre de séparation, en particulier une centrifugeuse, qui comprend au moins une zone transparente aux rayons, au moins une source de rayons, un dispositif de captation servant à capter la position de la limite de phase, et une dispositif servant à régler la position de la limite de phase sur une position de consigne, caractérisé en ce qu'en amont du dispositif de captation (36), au moins une zone d'exploration discrète (22), à laquelle on peut envoyer un rayon scrutateur (14) est réalisée sous la forme d'un trajet de rayon unique pour capter la transparence aux rayons des milieux (28, 30).

8. Dispositif selon la revendication 7, caractérisé en ce qu'en amont du dispositif de captation (36), sont disposées au moins deux zones d'exploration discrètes (22) auxquelles on peut envoyer un rayon scrutateur (14), plus précisément au moins une zone d'exploration (22) de chaque côté de la position de consigne de la limite de phase (32).

9. Dispositif selon la revendication 8, caractérisé en ce qu'en amont des zones d'exploration (22) qui peuvent tourner par rapport au dispositif d'exploration (18), est disposé un dispositif d'exploration (18) réalisé sous la forme d'un masque à fente.

10. Dispositif selon la revendication 9, caractérisé en ce que le dispositif de mesure est constitué par un dispositif détecteur (12) servant à détecter des signaux UN (72) et des signaux ZERO (74).

11. Dispositif selon la revendication 10, caractérisé en ce qu'un dispositif compteur (48) est connecté au dispositif détecteur.

12. Dispositif selon la revendication 11, caractérisé en ce qu'il est prévu une marque de départ ou une fenêtre de déclenchement pour le dispositif compteur (48).

13. Dispositif selon la revendication 7, caractérisé en ce que la chambre de séparation (26) est constituée par un rotor de centrifugeuse.

14. Dispositif selon les revendications 8 à 13, caractérisé en ce que les zones d'exploration (22) sont réalisées sur une surface radiale (42) de la chambre de séparation (26), mobiles en rotation avec la chambre de séparation (26), et le dispositif d'exploration (18) est disposé fixe à proximité de la surface radiale (42) ou face à cette surface.

15. Dispositif selon une des revendications 8 à 14, caractérisé en ce que les zones d'exploration (42), disposées l'une à la suite de l'autre, forment une ligne qui coupe la ligne de consigne de la limite de phase (32).

16. Dispositif selon une des revendications 8 à 15, caractérisé en ce que les zones d'exploration (22) sont disposées à un écartement les unes des autres qui correspond au diamètre des zones d'exploration (22)

17. Dispositif selon une des revendications 8 à 16, caractérisé en ce que les zones d'exploration (22) présentent un diamètre de 1 mm.

18. Dispositif selon une des revendications 15 à 17, caractérisé en ce que la ligne formée par les zones d'exploration (22) forme un plus petit angle avec la ligne de consigne dans la région de la largeur de variation du réglage de la ligne de consigne qu'en dehors de cette zone, de sorte que cette ligne possède la forme d'un S.

19. Dispositif selon une des revendications 8 à 18, caractérisé en ce que le dispositif d'exploration (18) constitue un masque à barre ou à fente disposé transversalement à la limite de phase (32).

20. Dispositif selon une des revendications 7 à 19, caractérisé en ce que le dispositif d'exploration (18) possède une largeur qui correspond au diamètre des zones d'exploration (22).

21. Dispositif selon une des revendications 7 à 20, caractérisé en ce que la source de rayon (10) et le dispositif de captation (36) sont disposés du même côté de la chambre de séparation (26) et en ce que la paroi frontale arrière (46) de la chambre de séparation (26) est rendue réfléchissante.

22. Dispositif selon la revendication 21, caractérisé en ce que les zones d'exploration (22) sont présentées sous la forme de régions réfléchissantes formées sur la paroi frontale arrière (46).

# Fig. 1a

# Fig. 1b

# Fig. 2

SOLLWERT

**Fig. 3**

RBC WBC PLS

Sichtfenster nK

32 28 22-1
22-2
22-3 22-4
22-5
22-6
22-7
22-8

P

18

26

balkenförmiger
Abtaststrahl

nicht konzentrische Lochreihe
( konzentrische Phasengrenze)

**Fig. 4**

Aufsicht Separationskammer
( prinzipielle Ausbildung der
Phasengrenzen )

PLS
WBC
RBC

26
54

62
63
64 61

Sichtsektor für Trenngrenze

**Fig. 5**

RBC WBC PLS

Sichtfenster K

62
63
64

konzentrische Lochreihe
( nicht konzentrische Phasengrenze )

## Fig. 6

Meßsignal

## Fig. 7